(19) **Europäisches Patentamt / European Patent Office / Office européen des brevets**

(11) **EP 3 717 934 B1**

(12) **FASCICULE DE BREVET EUROPEEN**

(45) Date de publication et mention
de la délivrance du brevet:
**26.04.2023 Bulletin 2023/17**

(21) Numéro de dépôt: **18804666.8**

(22) Date de dépôt: **27.11.2018**

(51) Classification Internationale des Brevets (IPC):
**G01S 7/52** *(2006.01)*    **G01S 7/53** *(2006.01)*
**G01D 9/00** *(2006.01)*    **H04J 3/06** *(2006.01)*
**H04L 7/00** *(2006.01)*

(52) Classification Coopérative des Brevets (CPC):
**G01S 7/52004; G01D 9/005; G01S 7/53;**
**H04L 7/0008;** H04J 3/0608; H04J 3/0638

(86) Numéro de dépôt international:
**PCT/EP2018/082729**

(87) Numéro de publication internationale:
**WO 2019/105945 (06.06.2019 Gazette 2019/23)**

(54) **SYSTÈME DE GÉNÉRATION DE SIGNAUX DE SYNCHRONISATION REDONDANTS**

**SYSTEM ZUR ERZEUGUNG REDUNDANTER SYNCHRONISATIONSSIGNALE**

**SYSTEM FOR GENERATING REDUNDANT SYNCHRONISATION SIGNALS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2017 FR 1701250**

(43) Date de publication de la demande:
**07.10.2020 Bulletin 2020/41**

(73) Titulaire: **Thales**
**92400 Courbevoie (FR)**

(72) Inventeurs:
• **FASSY, Olivier**
**06903 Sophia-Antipolis (FR)**
• **TOMASINI, Didier**
**06903 Sophia-Antipolis (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-02/056176     FR-A1- 2 887 096**
**US-B1- 6 697 300**

• **SMART BATTERY SYSTEM IMPLEMENTERS FORUM: "SMBus Control Method Interface Specification, Version 1.0", INTERNET CITATION, 10 décembre 1999 (1999-12-10), XP002399162, Extrait de l'Internet: URL:http://www.smbus.org/specs/smbus_cmi1 0 .pdf [extrait le 2006-09-06]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

*DOMAINE DE L'INVENTION*

L'invention concerne le domaine des antennes acoustiques linéaires remorquées numériques, de technologie électro-acoustique conventionnelle et plus particulièrement les systèmes électroniques de télémétrie assurant la numérisation des signaux générés par l'ensemble des hydrophones acoustiques constituant une telle antenne et par des capteurs non acoustiques ou "NAS" selon l'acronyme de la dénomination anglo-saxonne "Non Acoustic Sensor" (capteurs de température, d'immersion, de cap, de roulis/tangage, etc....) nécessaires au traitement de signal des voies Sonar et à leur exploitation.

L'invention concerne directement un procédé et un système de production et de distribution de signaux de synchronisations redondés dans un système électronique de télémétrie d'une antenne acoustique linéaire remorquée.

*CONTEXTE DE L'INVENTION - ART ANTERIEUR*

De façon globale dans le domaine de la lutte anti-sous-marine, la capacité d'écoute en très basse fréquence reste un défi permanent et un enjeu majeur, et il est constamment recherché des solutions techniques, touchant en particulier le matériel et/ou le traitement des signaux sonar, afin d'augmenter les distances de détection.

Dans les années 80-90, les systèmes de détection basées sur des technologies d'antennes linéaires remorquées à capacité d'écoute très basse fréquence (ETBF) ont radicalement fait progresser les capacités des systèmes sonar de défense en procurant une capacité d'écoute permettant de détecter les menaces classiques par grands fonds, parfois au-delà de la première "zone de convergence".

Cependant, depuis quelques années, de nouveaux risques liés à la détection et à la contre-détection par des ondes sonores en Ultra Basse Fréquence (<< 100 Hz) apparaissent, mettant en exergue le besoin de d'adapter les moyens d'écoute actuels à cette gamme de fréquences.

Une réponse efficace à ce problème consiste à réaliser des antennes linéaires remorquées de très grande longueur, de plusieurs centaines de mètres par exemple, comportant un nombre accru de senseurs acoustiques (hydrophones).

La création et la réalisation de telles antennes, des antennes présentant à la fois une très grande longueur et, pour des raisons de logeabilité de l'antenne dans le bâtiment tracteur, un petit diamètre, pose un problème important de câblage du fait du volume occupé par l'ensemble des interconnexions reliant les différents capteurs au système central qui synchronise l'ensemble, récupère et traite les signaux provenant des capteurs et les alimente en énergie, système généralement situé au niveau de l'extrémité proximale de l'antenne.

Par suite, le problème posé par l'augmentation de la longueur des antennes et donc du nombre de capteurs consiste donc, en pratique, à rechercher des solutions permettant de limiter la densité du câblage d'interconnexion à l'intérieur de l'antenne, sans pour autant sacrifier la robustesse système (tolérance aux pannes, fonctionnement en mode dégradé avec des mécanismes les plus simples possibles ...), ni augmenter le nombre et la taille des objets électroniques (contrainte petit diamètre) impliqué dans cette interconnexion ou les contraintes d'alimentation de l'antenne (nombre de lignes d'alimentation réduit, voir une seule ligne, contraintes de tension d'isolement limitée aux valeurs usuelles au niveau des liaisons câblés, des connecteurs de jonction de modules d'antennes et au niveau du gréement de remorque ...).

Une antenne radar générique est connue de FR2887096. Un dispositif de synchronisation tolérant aux pannes est connu de WO02/056176. La spécification du SMBus est connue de XP002399162.

*PRESENTATION DE L'INVENTION*

L'invention décrite dans le texte qui suit s'inscrit dans un système de télémétrie global innovant, capable d'assurer l'alimentation en énergie des différents éléments de l'antenne, la distribution des différents signaux de synchronisation, ainsi que la collecte et le transit des données et l'adaptation des signaux en tête d'antenne, tout en proposant une solution complète au problème technique évoqué précédemment.

Ledit système, comporte à cet effet, un dispositif de collecte de données, un dispositif de distribution de signaux de synchronisation avec redondance et un dispositif d'alimentation antenne, dont la mise en oeuvre simultanée permet de résoudre le problème posé.

Par suite, un but de la présente invention est de proposer un système de distribution des signaux de synchronisation redondé dans une antenne acoustique linéaire remorquée comportant une pluralité de modules acoustiques (hydrophones), ledit système comportant une voie unique de synchronisation, de façon à diminuer le nombre de paires de fils nécessaires pour acheminer les signaux de synchronisation vers les différents modules.

Un autre but de l'invention est de proposer un système de distribution synchronisation permettant de garantir, malgré l'absence de synchronisation redondante transmise, par voie câblée, par le système de synchronisation général, la synchronisation de l'un ou l'autre des modules acoustiques ne recevant plus les signaux de synchronisation de l'antenne.

A cet effet l'invention a pour objet, selon un premier aspect, un procédé de génération d'un signal de synchronisation redondant CMI-Secours (H) d'un signal de synchronisation principal CMI véhiculé par un bus de synchronisation général destiné à synchroniser le fonctionnement de différents modules d'acquisition de données; ces modules formant un groupe de modules d'acquisition de données, ou HUBs, et étant placés dans une chaine de modules d'acquisition, chaque module transférant les données acquises sur un bus de données commun à tous le modules d'acquisition de la chaine, lesdites données circulant sur le bus de données commun sous formes de trames de données (C), chaque trame comportant un top de début de trame ou Top_Trame_Ligne, ledit signal de synchronisation principal CMI étant synchrone du flot des trames (C) circulant sur le bus de données. Le procédé selon l'invention est caractérisé en ce qu'un signal de synchronisation redondant CMI_Secours est formé au niveau de chaque HUB en extrayant, le top de début de trame (E) de chaque trame passant sur le bus de données et en produisant un top de synchronisation interne ou Top_Trame_Secours (F) dont la période est asservie sur la période d'apparition du top de début de trame (E).

Selon différentes dispositions pouvant être considérées chacune séparément ou en combinaison avec d'autres, le procédé selon l'invention peut comporter diverse dispositions énumérées ci-après.

Selon une première disposition, le signal Top_Trame_Secours (F) produit fait l'objet d'un recalage temporel fonction de la position du groupe de modules d'acquisition considéré dans la chaine.

Selon une autre disposition, après recalage temporel, le signal Top_Trame_Secours (F) est utilisé pour former le signal de synchronisation CMI_Secours.

Selon une autre disposition, le procédé selon l'invention met en oeuvre une opération de détection de la présence du signal CMI sur le bus de synchronisation général, le signal CMI-Secours étant substitué au signal CMI en cas de défaillance de ce dernier.

Selon une autre disposition, le signal Top_Trame_Ligne étant un signal périodique de période $T_{ech}$ égal à la période de renouvellement des trames de données, le signal Top_Trame_Secours produit est un signal périodique dont la valeur de la période est définie à partir d'une horloge locale $T_{125M}$, à un instant donné et pour un nombre N donné de périodes, par la relation suivante:

$$T_{TopTrameSecours} = \frac{x \cdot mmm + (N-x) \cdot (mmm+1)}{N} \cdot T_{125M}$$
$$= mmm,zzz \cdot T_{125M}$$

où *mmm,zzz* représente un nombre décimal positif, dont la valeur est définie en prenant en compte, à l'instant considéré, le résultat d'un nombre donné de mesures du décalage temporel entre le signal Top_Trame_Ligne (E) extrait et le signal Top_Trame_Secours (F) produit.

Selon une autre disposition, le nombre N de périodes considérées étant égal à 128, le nombre *mmm, zzz* est déterminé en prenant en compte, à l'instant considéré, le résultat de 128 mesures du décalage temporel entre le signal Top_Trame_Ligne (E) extrait et le signal Top_Trame_Secours (F) produit.

Selon une autre disposition, le nombre *mmm,zzz* est déterminé à partir de la moyenne de 128 mesures consécutives du décalage temporel entre le signal Top_Trame_Ligne (E) extrait et le signal Top_Trame_Secours (F) produit.

Selon une autre disposition, le nombre *mmm,zzz* est déterminé par filtrage, au moyen d'un FIR, de la valeur du décalage temporel entre le signal Top_Trame_Ligne (E) extrait et le signal Top_Trame_Secours (F) produit sur une profondeur de 128 mesures.

L'invention se rapporte également à un procédé de synchronisation d'une pluralité de modules d'acquisition de données formant un groupe de modules d'acquisition, les modules d'acquisition de données étant placés dans une chaine de modules d'acquisition, chaque module transférant les données acquises sur un bus de données commun à tous les modules d'acquisition de la chaine, lesdites données circulant sur le bus de données commun sous formes de trames de données (C), chaque trame comportant un top de début de trame ou Top_Trame_Ligne, ledit signal de synchronisation principal CMI étant synchrone du flot des trames (C) circulant sur le bus de données, le procédé comprenant, pour chaque module d'acquisition, une étape d'utilisation d'un signal de synchronisation principal CMI véhiculé par un bus de synchronisation général pour synchroniser le module d'acquisition de données avec les autres modules d'acquisition du groupe de modules d'acquisition de données et, lorsqu'une défaillance du signal de synchronisation principal CMI est détectée, utilisation du signal de synchronisation redondant, à la place du signal de synchronisation principal CMI, pour synchroniser le module d'acquisition de données avec les autres modules d'acquisition du groupe de modules d'acquisition de données.

L'invention se rapporte également à un dispositif de synchronisation apte à mettre en oeuvre, au sein du HUB auquel il appartient, le procédé selon l'invention, caractérisé en ce qu'il comporte des moyens pour générer un signal de synchronisation redondant CMI_Secours comprenant ; par exemple principalement :

- un module d'extraction du top de trame, ou Top_Trame_Ligne, de chaque trame passant sur le bus de données,
- un ensemble de modules générant le top de synchronisation interne ou Top_Trame_Secours à partir du signal Top_Trame_Ligne extrait par le module d'extraction.

Le Top Trame_Ligne peut être obtenu par détection et extraction du mot de synchronisation de la trame de données.

Le dispositif comporte, par exemple, principalement:

- le module d'extraction du top de trame, - un ensemble de modules constituant le mécanisme qui génère un signal Top_Trame_Secours à partir du signal Top_Trame_Ligne extrait par le module d'extraction;

Et éventuellement :

- un module qui réalise le contrôle de la présence et de l'intégrité du signal de synchronisation CMI fourni par le bus de synchronisation en entrée du HUB;

- un module de multiplexage qui délivre aux différentes unités d'acquisition du HUB, sur commande du module de contrôle d'intégrité, soit le signal de synchronisation CMI reçu sur le bus de synchronisation, soit le signal de synchronisation CMI_Secours synthétisé localement par le dispositif.

Et/ou éventuellement :

- un module qui assure le recalage temporel du signal Top_Trame_Secours généré par l'ensemble de modules et forme un signal rephasé (i.e. recalé temporellement) Top_Trame_Secours_dly;

- un module qui génère un signal de synchronisation de secours, ou CMI_Secours, à partir du signal Top_Trame_Secours généré et rephasé.

Selon une disposition particulière, l'ensemble de modules qui génère le signal Top_Trame_Secours, comporte principalement:

- un module qui génère le signal Top_Trame_Secours à partir d'une information de consigne de période moyenne ($mmm,zzz \cdot T_{125M}$);

- un module comparateur de Phase qui mesure le décalage temporel $\Delta T_{inst}$ entre le signal Top_Trame_Secours généré et le signal Top_Trame_Ligne extrait par le module d'extraction;

- un module accumulateur qui réalise la somme, sur 128 périodes consécutives, des décalages instantanés $\Delta T_{inst}$ entre le signal Top_Trame_Secours et le signal Top_Trame_Ligne mesurés par le module Comparateur de Phase;

- une module de Filtrage qui calcule une erreur moyenne par période, $\Delta T_{moy}$, cette erreur étant calculée par la formule suivante :

$$\Delta T_{moy} = \frac{1}{128} \sum_{k=1}^{128} \Delta T_{inst}$$

- un module de génération de consigne qui délivre l'information de consigne de période moyenne ($mmm,zzz \cdot T_{125M}$) au module qui génère le signal Top_Trame_Secours, l'information de consigne étant élaborée partir de la valeur de l'erreur moyenne par période fournie par le module de filtrage, ladite information étant remise à jour toutes les N=128 périodes;

- un module d'accrochage qui calcule une première valeur de fréquence moyenne en intégrant le signal de synchronisation Top_Trame_Ligne sur 1024 trames et délivre au module de génération de consigne une première consigne initiale ($mmm_0,zzz_0$).

Le top de début de trame (E) de chaque trame passant sur le bus de données peut être extrait au moyen d'une horloge asynchrone autonome.

L'invention se rapporte également à un module d'acquisition de données comprenant un dispositif d'acquisition selon l'invention.

L'invention se rapporte également à un système comprenant un groupe de modules d'acquisition de données placés dans une chaine de modules d'acquisition, le système comprenant un bus de synchronisation général destiné à véhiculer un signal de synchronisation principal destiné à synchroniser le fonctionnement des modules d'acquisition, le système comprenant un bus de données, chaque module transférant les données acquises sur le bus de données, le bus de données étant commun à tous le modules d'acquisition de la chaine, lesdites données circulant sur le bus de données commun sous formes de trames de données (C), chaque trame comportant un top de début de trame ou Top_Trame_Ligne, ledit signal de synchronisation principal CMI étant synchrone du flot des trames (C) circulant sur le bus de données, dans lequel chaque module d'acquisition de données est un module d'acquisition de données selon l'invention.

Le système peut en outre comporter des groupes de capteurs, chaque module d'acquisition étant associé à un des groupes de capteurs.

## DESCRIPTION DES FIGURES

Les caractéristiques et avantages de l'invention seront mieux appréciés grâce à la description qui suit, description qui s'appuie sur les figures annexées qui présentent:

la figure1, une illustration schématique de l'architecture d'un système global de télémétrie apte à intégrer le système de synchronisation selon l'invention;

la figure 2, Un chronogramme représentant le signal de synchronisation général CMI;

la figure 3, une illustration schématique mettant en évidence l'implantation des différents dispositifs de synchronisation selon l'invention dans le système global de la figure 1 ;

la figure 4 un chronogramme illustrant le principe du rephasage du signal Top_Trame_Secours au niveau de chaque HUB;

la figure 5, un organigramme décrivant les étapes essentielles du procédé mis en oeuvre par un dispositif de synchronisation selon l'invention pour générer le signal CMI_Secours;

la figure 6, un schéma bloc décrivant les principaux modules fonctionnels d'un dispositif de synchronisation selon l'invention;

la figure 7, une illustration du principe de fonctionnement de l'ensemble du système de génération selon l'invention.

## DESCRIPTION DETAILLEE

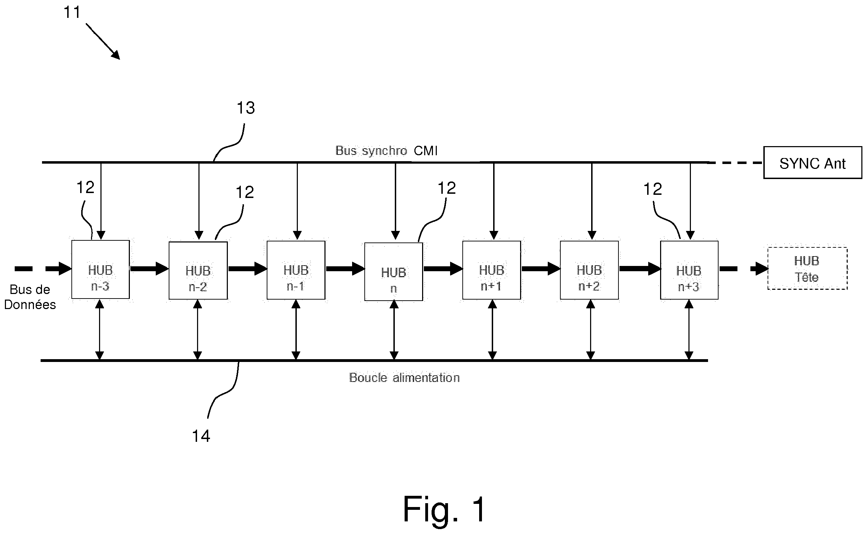

Le système de synchronisation selon l'invention, s'intègre dans un système global de télémétrie 11, représenté de manière schématique sur la figure 1, dans lequel les différents senseurs acoustiques (hydrophones) constituant l'antenne, sont gérés par un ensemble de modules d'acquisition 12 ou HUB. Chaque HUB gère un groupe donné de senseurs acoustiques et est repéré par son rang n qui correspond à la position occupée par les senseurs acoustique qui lui sont associés. Les HUBs ainsi agencés forment une chaîne chaque HUB étant repéré par son rang dans la chaîne.

Dans un tel système, chaque HUB 12 de rang n reçoit du Hub de rang n-1, HUB n-1, qui le précède dans la chaîne, le BUS de données véhiculant les trames de données numériques correspondant aux signaux reçus par les différents senseurs associés aux HUBs qui le précèdent, ainsi qu'un signal de synchronisation général (principal) CMI délivré par un BUS 13 de synchronisation générale de l'antenne. Chaque HUB est en outre alimenté par une boucle d'alimentation générale 14.

En fonctionnement nominal, c'est-à-dire hors avarie, chaque module d'acquisition, ou HUB, est synchronisé, par le signal de synchronisation commun (principal) CMI.

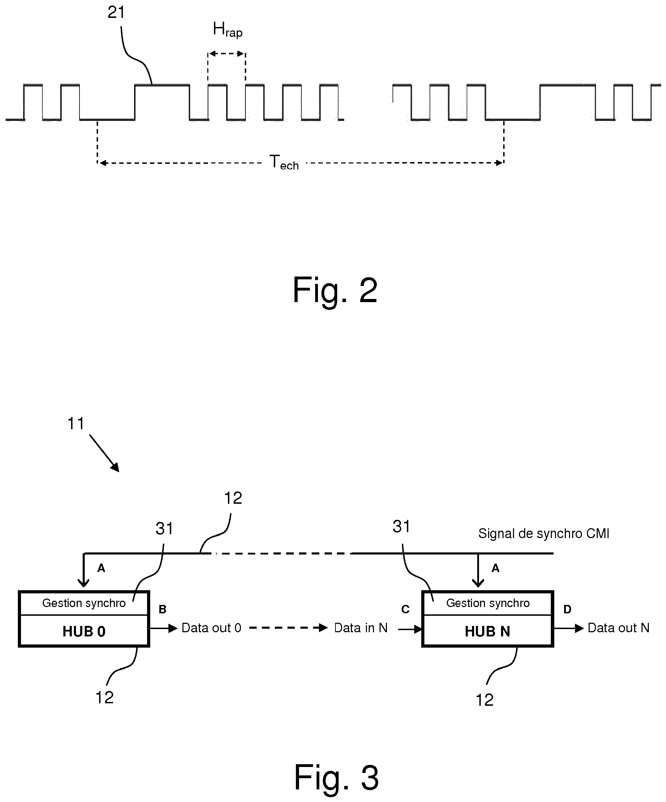

Le signal CMI comme l'illustre la figure 2 est un signal composite, de périodicité $T_{ech}$, qui véhicule une horloge $H_{rap}$, dite "horloge rapide", et un top de synchronisation antenne 21 qui sert à cadencer de façon parfaitement synchrone l'échantillonnage de l'ensemble des signaux antennes à numériser.

L'horloge rapide $H_{rap}$, synchrone du top échantillonnage (top de synchronisation), est aussi utilisée par chaque module HUB 12 du système pour piloter, entre autres, les convertisseurs Analogique/Numériques (génération d'une horloge synchrone pour les modulateurs Sigma-Delta et les filtres FIR intégrés aux convertisseurs analogique / numériques (ADC)...).

En cas de réception incorrecte du signal CMI, le HUB se trouve dans l'impossibilité de se synchroniser.

La solution communément utilisée pour pallier une éventuelle défection du signal CMI consiste à prévoir un signal de synchronisation de secours, transmis par une ligne dédiée, sur lequel le hub commute. Cependant une telle solution nécessite la mise en place dans l'antenne d'une ligne de synchronisation supplémentaire.

Le système de synchronisation selon l'invention propose une solution différente basée comme l'illustre la figure 3, sur la mise en oeuvre d'un ensemble de dispositifs de synchronisation 31 reliés en parallèle au Bus de synchronisation 13 qui véhicule le signal CMI. Chaque dispositif de synchronisation 31 est dédié à un HUB 12 particulier. Autrement dit, chaque dispositif de synchronisation 31 appartient au HUB 12 auquel il est dédié.

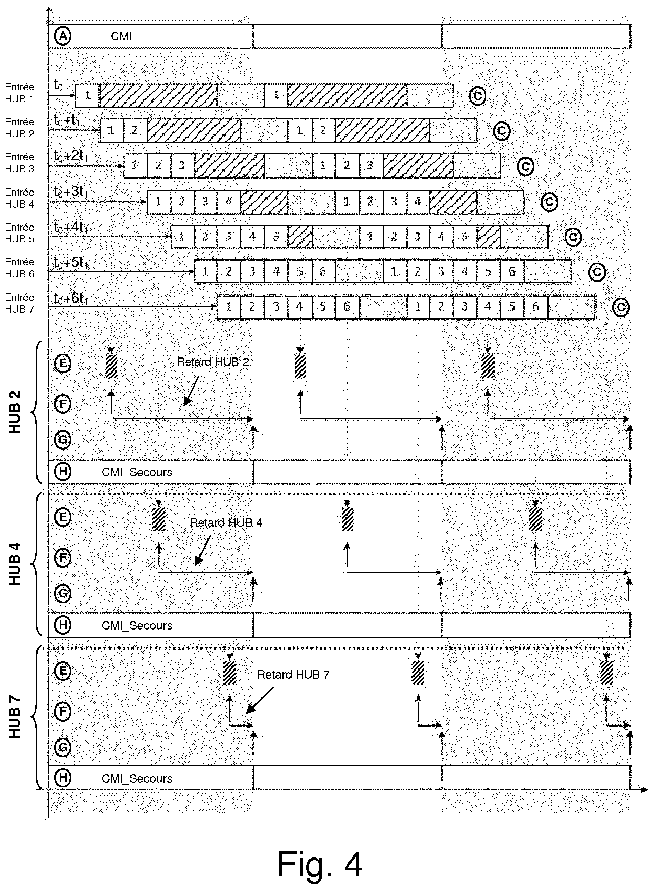

Chaque dispositif de synchronisation 31 a pour fonction, comme l'illustre le chronogramme de la figure 4, de mettre en oeuvre un procédé consistant à recréer localement, au niveau de chaque HUB 12, un signal de synchronisation CMI Secours, en générant un signal de synchronisation interne ou Top_Trame_Secours à partir du top de synchronisation trame contenu dans chaque trame de donnée entrante « Data in » circulant sur le BUS de donnée et, lorsqu'une défaillance du signal de synchronisation CMI se produit, de substituer le signal CMI Secours ainsi formé au signal CMI défaillant, de façon à assurer une continuité de fonctionnement du HUB. Selon l'invention, le procédé mis en oeuvre consiste principalement à détecter l'occurrence des tops de synchronisation trame sur le BUS de données, de former à partir de ces tops un signal isolé ou signal Top_trame_Ligne, et de générer un signal de synchronisation interne Top_Trame_Secours dont la période est asservie sur la période moyenne du signal Top_trame_Ligne formé.

La synchronisation de secours ainsi obtenue ne nécessite pas de câblage autre que le bus de synchronisation 13 et le bus de données.

Avantageusement, le signal de synchronisation interne Top_Trame_Secours est généré à l'aide d'une horloge asynchrone autonome. Cette horloge est interne au HUB.

Avantageusement, le top de début de trame (E) de chaque trame passant sur le bus de données est extrait à l'aide d'une horloge asynchrone autonome. Cette horloge est interne au HUB.

Avantageusement, cette horloge est une horloge rapide (par rapport à la période d'apparition des trames de données sur le BUS).

Le principe de formation du signal Top-Trame-Secours à partir du signal Top_Trame_Ligne est décrit plus en détail dans la suite du texte dans le cadre de la description de moyens aptes à mettre en oeuvre le procédé selon l'invention.

Selon le mode de réalisation considéré, un dispositif de synchronisation 31 peut être conçu comme un composant programmable dédié, configuré pour réaliser la fonction de synchronisation décrite dans la suite du document.

Alternativement, un dispositif de synchronisation 31 peut être intégré au composant programmable, de type FPGA, assurant la fonction de gestion globale (Synchro nominale, collecte de données, pilotage des ADCs...) du HUB 12 auquel il est dédié.

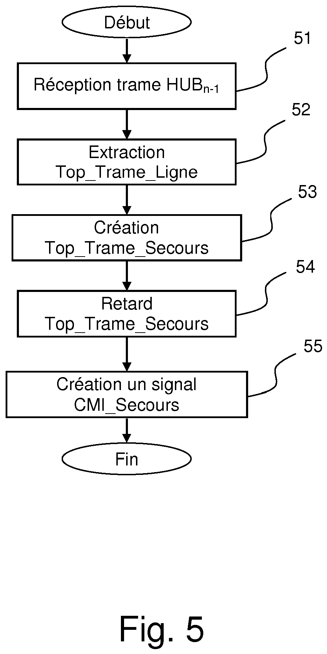

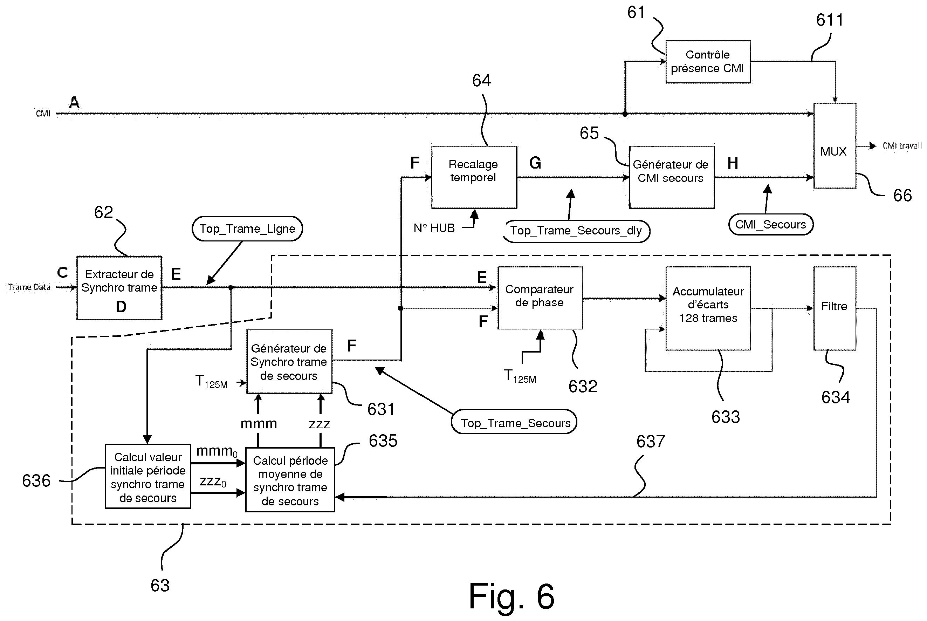

La figure 6 présente le schéma fonctionnel général d'un dispositif de synchronisation 31 selon l'invention. Ce dispositif fait partie d'un HUB qui est relié au bus de données et au bus de synchronisation général 13. Ce dispositif comporte différents modules fonctionnels qui sont décrits plus en détails dans la suite du texte. Ces modules sont configurés et arrangés fonctionnellement les uns par rapport aux autres de façon à implémenter les étapes du procédé, illustré par la figure 5, permettant de générer le signal CMI_Secours.

Ce procédé comporte les étapes principales suivantes (les repères alphabétiques entre parenthèses font référence aux repères correspondants de la figure 6):

- une étape 51 durant laquelle le dispositif 31 du HUB de rang n, $HUB_n$, reçoit (C) la trame de données du HUB qui le précède dans la chaine, le $HUB_{n-1}$, avec un retard $\theta_n = t0 + (n - 1)t1$ par rapport au top 21 fourni par le signal de synchronisation général CMI transmis par le système de synchronisation générale de l'antenne.

- une étape 52 durant laquelle le dispositif de synchronisation 31 dédié au $HUB_n$ extrait le signal Top_Trame_Ligne (E), en décodant le mot de synchronisation du message entrant. Le phasage temporel du Top_Trame_Ligne par rapport au top synchro CMI est différente pour chacun des HUB et dépend de la position du HUB considéré dans la chaine formée par l'ensemble des HUBs.

Cette détection du signal Top_Trame_Ligne est entachée d'une gigue (ou "jitter" selon la dénomination anglo-saxonne reconnue) d'autant plus importante que le rang n du HUB considéré est plus élevé, du fait notamment du cumul du temps de traversé des HUBs précédents,

Cependant, il est à noter ici que la valeur moyenne de la gigue est avantageusement nulle, puisque la fréquence d'émission de la trame initiale émise par le HUB1 est égale à la fréquence d'échantillonnage.

- Une étape 53 durant laquelle le dispositif de synchronisation filtre le signal Top_Trame_Ligne (E) récupéré, signal présentant une gigue, à l'aide d'un mécanisme incorporant une boucle à verrouillage de phase numérique, pour créer et délivrer un signal Top_Trame_Secours (F), créé à partir d'une horloge locale 125 MHz et asservi sur le signal Top_Trame_Ligne (E) nettoyé de sa gigue.

Ainsi, le signal Top_Trame_Secours délivré est un signal créé à partir d'une horloge locale rapide $T_{125M}$ (à 125MHz par exemple), interne au HUB, dont la période est asservie sur la valeur moyenne de la période d'apparition du signal Top_Trame_Ligne.

Le mécanisme de synthèse du signal Top_Trame_Secours (F) est constitué par un ensemble de modules dont le fonctionnement est détaillé plus loin.

Avantageusement cette disposition permet aussi au système de transmettre une synchronisation antenne via un lien de transmission de données HD asynchrone cadencé par une horloge locale (interne au HUB) pour éviter accumulation de gigue (« jitter »).

Il est à noter que la position du Top_Trame_Secours (F) ainsi formé par rapport au top synchro CMI est différente pour chacun des HUBs.

- Une étape 54 durant laquelle le dispositif de synchronisation retarde le signal Top_Trame_Secours (F) d'un retard $T_{ech}$ - $t_0$ - $nt_1$ dépendant de la position dans la chaine du HUB de rang n considéré, pour créer un Top_Trame_Secours_dly (G).

Cette fonction de recalage temporel est nécessaire dans la mesure où, comme cela a été dit précédemment, tous les HUBs ne reçoivent pas la trame de données au même moment.

En effet, le premier HUB de la chaine (HUB$_0$) émet sa trame à l'instant $t_0$ après la réception d'un top trame (top échantillonnage) extrait du signal de synchro externe (CMI). Ensuite cette trame de donnée est retardée d'un temps $t_1$ à chaque traversée de HUB. Le HUB de rang n reçoit donc la trame de données au temps $t_0$ + $(n$ - $1)t_1$ comme l'illustre le chronogramme de la figure 4.

Par suite, le signal TopTrameSecours (F) n'étant pas en phase avec le Top CMI dans les différents Hub du système, il est nécessaire au niveau du HUB considéré de retarder le signal TopTrameSecours (F) d'un temps égal à $T_{ech}$ - $t_0$ - $nt_1$ pour déclencher, si nécessaire la délivrance d'un signal CMI_Secours (H) en phase avec le signal CMI d'entrée.

De la sorte, la position du Top_Trame_Secours_dly (G) par rapport au top synchro CMI est avantageusement identique pour chacun des HUBs.

- Une étape 55 durant laquelle le dispositif de synchronisation recrée, à partir de l'horloge locale $H_{125M}$ (horloge 125MHz) un signal CMI_Secours (H) resynchronisé par le Top_Trame_Secours_dly (G) aligné avec le signal CMI (A) présent à l'entrée du HUB.

Pour chacun des HUBs, le signal CMI_Secours (H) est donc avantageusement en phase avec le signal CMI (A) ce qui permet de disposer d'une référence temporelle commune et rend possible l'échantillonnage synchrone des données sur l'ensemble des HUBs même en l'absence du signal CMI sur certains d'entre eux.

Afin de mettre en oeuvre ces différentes étapes, le dispositif de synchronisation 31 selon l'invention comporte, comme illustré par la figure 6, un ensemble de modules fonctionnels implémentés sous forme de fonctions numériques qui coopèrent pour générer le signal CMI_Secours.

Le module 61 réalise, de manière classique, le contrôle de la présence et de l'intégrité du signal de synchronisation CMI (A) fourni par le bus de synchronisation 13 en entrée du HUB 12 considéré, auquel le dispositif est dédié.

En cas d'absence, de perte, du signal de synchronisation, et plus généralement en cas de défaillance du signal de synchronisation il émet une commande de commutation 611 à destination du module de multiplexage 66, lequel commute alors le signal de synchronisation CMI_Secours (H) produit par le module de génération 65. De cette façon, le HUB utilise le signal de synchronisation de secours CMI_secours en lieu et place du signal de synchronisation principal CMI pour sa synchronisation avec les autres HUBs. Autrement dit, le HUB utilise le signal de synchronisation de secours CMI_secours en lieu et place du signal de synchronisation principal CMI pour synchroniser, avec les autres HUBs, l'acquisition des signaux issus des capteurs gérés par le HUB et/ou l'injection de trames de données par le HUB sur le bus de données.

Le module 62 d'extraction du top de trame, ou Top_Trame_Ligne (E), réalise les opérations de l'étape 52 décrite précédemment.

A cet effet, le signal Top_trame_Ligne (E) est obtenu par détection et extraction du mot de synchronisation de la trame de données, selon un principe d'extraction classique sur un code auto-synchronisant.

Le signal Top_trame_Ligne (E) ainsi extrait a une période moyenne $T_{TopTrameLigneMoy}$ égale à la période d'échantillonnage $T_{ech}$ (i.e. à la période moyenne de circulation d'une trame de données). Cette période est mesurée par moyennage sur un nombre N de trames consécutives, à l'aide d'une horloge $H_{125M}$ (de période $T_{125M}$). Dans la suite du texte on considère à titre d'exemple non limitatif, N=128 trames consécutives.

$H_{125M}$ étant asynchrone par rapport à $H_{ech}$, la relation entre les deux horloges définit une période moyenne qui s'écrit :

$$T_{TopTrameLigneMoy} = T_{ech} = nnn,yyy \cdot T_{125M} \qquad [001]$$

Où *nnn et yyy* représentent respectivement la partie entière et la partie décimale du rapport entre $T_{ech}$ et $T_{125M}$. L'erreur sur cette mesure est ainsi inférieure à $\pm \frac{1}{128} T_{125M}$ (ou plus généralement $\pm \frac{1}{N} T_{125M}$).

Comme cela a été dit précédemment, Il est cependant entaché, d'une gigue, de valeur moyenne nulle. La valeur instantanée (i.e. pour une trame donnée de rang k) de la période du signal Top_Trame_ligne (E) peut donc être exprimée par la relation suivante :

$$T_{TopTrameLigneInst}(k) = T_{ech} \pm \delta_k \qquad [002]$$

où $\delta_k$ représente l'écart entre la période $T_{TopTrameLigneInst}$ de la trame k et $T_{ech}$.

Par ailleurs, il présente par rapport au signal CMI (A) un retard dont la durée dépend de la position du HUB considéré dans la chaine. On rappelle ici que le signal CMI (A) porte une horloge rapide et un top échantillonnage 21 comme illustré par la figure 2.

L'ensemble de modules 63 constitue le mécanisme qui réalise les opérations de l'étape 53 destinée à générer un signal Top_Trame_Secours (F) à partir du signal Top_Trame_Ligne (E) extrait par le module 62. Son fonctionnement est détaillé plus loin dans la description.

Le module 64 réalise les opérations de l'étape 54 destinée à assurer le recalage temporel du signal Top_Trame_Secours (F) généré et former un signal rephasé (i.e. recalé temporellement) Top_Trame_Secours_dly (G);

Le recalage temporel du signal Top_Trame_Secours (F) consiste à appliquer à ce dernier un retard dont la valeur est définie par le rang n du HUB considéré.

Le module 65 réalise les opérations de l'étape 55, destinée à générer un signal de synchronisation de secours, ou CMI_Secours (H)s, à partir du signal Top_Trame_Secours (F) généré et rephasé.

Le module 65 génère à partir de l'horloge interne $H_{125M}$ un signal de synchronisation CMI_Secours (H) présentant les mêmes caractéristiques que le signal CMI d'entrée (A) et resynchronisé par le signal Top_Trame_Secours_dly (G) délivré par le module générateur de retard 64.

Le module de multiplexage 66 a pour fonction, sur commande du module de contrôle d'intégrité 61, de délivrer aux différentes unités d'acquisition du HUB 12, soit le signal de synchronisation CMI (A) reçu sur le bus 13 soit le signal de synchronisation CMI_Secours (H) synthétisé localement au niveau du HUB considéré. Le signal de synchronisation principal CMI est délivré aux unités d'acquisition du HUB lorsqu'aucune défaillance du signal de synchronisation n'est détectée, et le signal de synchronisation de secours CMI_Secours (H) est délivré aux unités d'acquisition du HUB à la place du signal de synchronisation lorsqu'une défaillance du signal de synchronisation est détectée.

Avantageusement, le signal de synchronisation principal CMI est utilisé, par le HUB, pour cadencer un échantillonnage des signaux issus de capteurs gérés par le HUB et/ou pour cadencer l'injection de trames de données par le HUB sur le bus de données, lorsqu'aucune défaillance du signal de synchronisation principal CMI n'est détectée, et le signal de synchronisation de secours CMI_Secours (H) est utilisé à la place du signal de synchronisation pour cadencer un échantillonnage des signaux issus de capteurs gérés par le HUB et/ou pour cadencer l'injection de trames de données par le HUB sur le bus de données, lorsqu'une défaillance du signal de synchronisation principal CMI est détectée.

Comme il a été dit précédemment, l'ensemble de modules 63 a pour fonction de générer, à partir du signal Top_Trame_Ligne (E), extrait de la trame de données circulant sur le bus de données, un signal Top_Trame_Secours (F) utilisé pour former le signal de synchronisation CMI_Secours (H).

Dans une forme de réalisation particulière prise comme exemple, illustrée par la figure 6, il est constitué des modules 631 à 636, agencés de façon à réaliser une boucle à verrouillage de phase permettant de synchroniser de la façon la plus précise possible le signal Top_Trame_secours (F) généré et le signal Top_Trame_Ligne (E), autrement dit d'asservir le premier sur le second.

Cet ensemble de modules 63 est organisé autour d'un module 631 qui assure la génération proprement dite du signal Top_Trame_Secours (F).

Le module 631 génère le signal Top_Trame_Secours (F) à partir de l'information de consigne de période

moyenne ($mmm,zzz \cdot T_{125M}$), calculée par le bloc 635, où $mmm, zzz$ représente un nombre décimal donné. Le module 631 est un VCO numérique dont la fréquence de sortie est fonction d'une consigne d'entrée ($mmm,zzz$), rafraîchie toutes les 128 trames.

Par suite, pour générer un signal Top_Trame_Secours de période moyenne $mmm, zzz \cdot T_{125M}$, le module 631 génère une séquence de N=128 Top_Trame_Secours séquencés de la façon suivante :

- Création d'une sous-séquence de $k$ Top_Trame_secours de période $mmm \cdot T_{125M}$.
- Création d'une sous-séquence de (128 - $k$) Top_Trame_secours de période ($mmm$ + 1) $\cdot T_{125M}$.

Cette méthode permet avantageusement de limiter la gigue à $\pm T_{125M}$ durant la génération de la séquence de 128 Top_Trame_secours.

La période moyenne $T_{TopTrameSecours}$ d'une telle séquence de N=128 Top_Trame_secours est définie par la relation suivante:

$$T_{TopTrameSecours} = \frac{k \cdot mmm + (128-k) \cdot (mmm+1)}{128} \cdot T_{125M}$$

$$= \left( mmm + \frac{(128-k)}{128} \right) \cdot T_{125M}$$

$$= mmm, zzz \cdot T_{125M} \qquad\qquad [003]$$

où $mmm, zzz$ représente un facteur décimal donné.

La valeur de l'erreur $\Delta T_{TopTrameSecours}$ sur la période moyenne créée par rapport à la période du signal Top_Trame_Ligne est donnée par la relation:

$$\Delta T_{TopTrameSecours} = T_{TopTrameSecours} - T_{TopTrameLigneMoy} \qquad\qquad [004]$$

$$\Delta T_{TopTrameSecours} = \left( mmm + \frac{128-x}{128} \right) \cdot T_{125M} - nnn, yyy \cdot T_{125M} \qquad\qquad [005]$$

Selon l'invention, la valeur de x est choisie pour minimiser la valeur absolue de l'écart $\Delta T_{TopTrameSecours}$. De la sorte, pour N=128 trames, l'erreur sur $T_{TopTrameSecours}$ est inférieure à $\pm \frac{1}{128} T_{125M}$

Par suite, chacun des termes de l'équation [004] étant entaché d'une erreur inférieure à $\pm \frac{1}{128} T_{125M}$, l'erreur maximum sur $\Delta T_{TopTrameSecours}$ est également bornée, de telle sorte que l'on a:

$$\Delta T_{TopTrameSecours} \leq \pm \frac{1}{64} \cdot T_{125M} \qquad\qquad [006]$$

Par suite, deux cas peuvent alors se présenter:

- $T_{TopTrameSecours} > T_{Ech}$ : dans ce cas on peut avoir $mmm = nnn$ ou $mmm = nnn$ + 1

- $T_{TopTrameSecours} < T_{Ech}$ : dans ce cas on peut avoir $mmm = nnn$ ou $mmm = nnn$ - 1

La consigne de période moyenne ($mmm, zzz$), est mise à jour toutes les N=128 périodes.

Le changement de la valeur de consigne (donc de période du signal Top_Trame_Secours) constitue la cause principale de la gigue produite sur ce même signal, gigue dont l'amplitude en temps est fonction de l'importance de la correction.

Il est à noter que, vu la stabilité des quartz pouvant être utilisés pour synthétiser l'horloge $H_{125M}$ (quartz de

stabilité de l'ordre de 50ppm), la valeur de $T_{ech}$ reste suffisamment stable sur 2 tranches consécutives de 128 Top_Trame_Ligne pour que la correction à apporter ait donc avantageusement pour but principal de compenser l'erreur liée à au fait que la période moyenne du signal Top_Trame_Secours ($mmm, zzz \cdot T_{125M}$) n'est pas strictement égale à $T_{ech}$.

L'élaboration de cette consigne (*mmm, zzz*) est réalisée par les modules 632 à 636 de l'ensemble 63 décrits ci-après.

Le module comparateur de Phase 632, mesure le décalage temporel, l'écart de phase, entre le signal Top_Trame_Secours (F) généré par le bloc 631 et le signal Top_Trame_Ligne (E) extrait par le module 62.

Pour la Trame k, l'erreur (i.e. l'écart) de phase instantanée $\Delta T_{inst}$ entre Top_Trame_Ligne et Top_Trame_Secours est déterminée par la relation suivante:

$$\Delta T_{inst}(k) = T_{TopTrameLigneInst}(k) - T_{TopTrameSecours} \qquad [008]$$

$$\Delta T_{inst}(k) = (nnn, yyy \cdot T\_125M \pm \delta_k) - mmm \cdot zzz \cdot T_{125M} \qquad [009]$$

Le module accumulateur 633 réalise la somme, sur 128 périodes consécutives, des décalages temporels instantanés entre le signal Top_Trame_Secours (F) et le signal Top_Trame_Ligne (E) mesurés par le module Comparateur de Phase 632. La grandeur exprimée en sortie est un nombre entier de périodes $T_{125M}$.

Le cumul de ces décalages $\Sigma\Delta T_{inst}$ sur N=128 trames, a pour expression:

$$\sum_{k=1}^{128} \Delta T_{inst} = \sum_{k=1}^{128} [ (nnn, yyy \cdot T_{125M} \pm \delta_k) - mmm, zzz \cdot T_{125M} ] \qquad [010]$$

$$\sum_{k=1}^{128} \Delta T_{inst} = \sum_{k=1}^{128} [(nnn, yyy \cdot T_{125M}) - (mmm, zzz \cdot T_{125M})]$$
$$\pm \sum_{k=1}^{128} \delta_k \qquad [011]$$

La gigue moyenne $\delta$ ayant, a priori, une valeur moyenne nulle sur N=128 trames consécutives, le cumul $\Sigma\Delta T_{inst}$ sur 128 trames a alors pour expression approchée:

$$\sum_{k=1}^{128} \Delta T_{inst} \approx \sum_{k=1}^{128} [ (nnn, yyy \cdot T_{125M}) - (mmm, zzz \cdot T_{125M})] \qquad [012]$$

Soit, en tenant compte de la condition [006]:

$$\sum_{k=1}^{128} \Delta T_{inst} < \sum_{k=1}^{128} \frac{1}{64} \cdot T_{125M} < 2 \cdot T_{125M} \qquad [013]$$

Le module de Filtrage 634 calcule une erreur moyenne par période, $\Delta T_{moy}$, qui correspond à la moyenne sur N=128 trames consécutives, de l'erreur de phase du signal Top_Trame_Secours mesurée pour chaque trame. Cette erreur sur la période $\Delta T_{moy}$ est alors estimée par la formule suivante :

$$\Delta T_{moy} = \frac{1}{128} \sum_{k=1}^{128} \Delta T_{inst} \qquad [014]$$

La valeur de l'erreur moyenne par période $\Delta T_{moy}$ est fournie au module 635 pour qu'il corrige sa consigne. A partir de la valeur de l'erreur moyenne par période 637 fournie par le module de filtrage 634, le module 635 calcule la nouvelle valeur de consigne (*mmm,zzz*) pour la génération des N=128 prochains Top_Trame_Secours par le module 631.

Il est à noter, qu'à l'initialisation du système, la première consigne ($mmm_0, zzz_0$) est fournie par le module d'accrochage 636 qui calcule une première valeur de fréquence moyenne en intégrant le signal de synchronisation Top_Trame_Ligne (E) sur 1024 trames afin d'avoir une valeur de période initiale la plus précise possible. Cette valeur initiale est transmise au module 635.

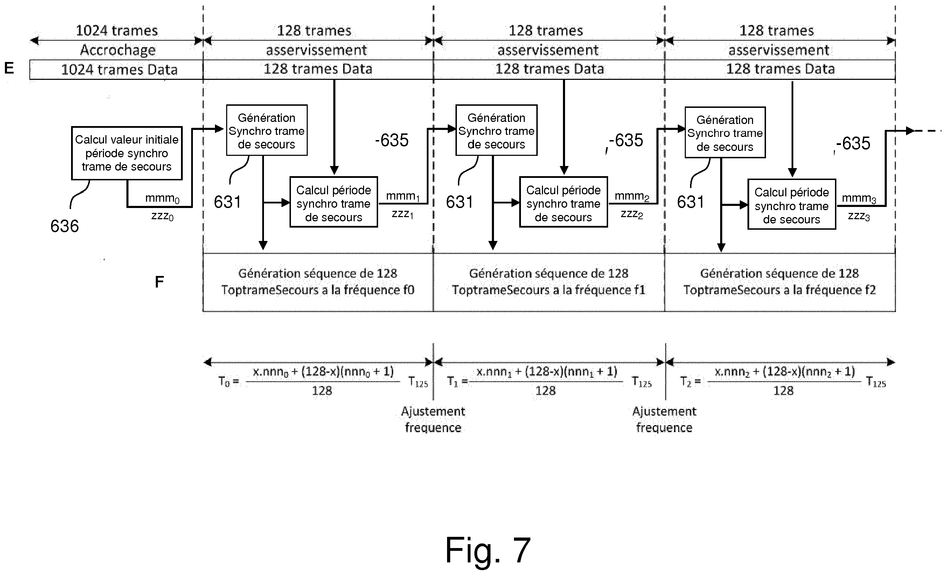

Ainsi constitué, l'ensemble 63 se présente comme un système asservi dont le fonctionnement peut être illustré, d'un point de vue séquentiel, par le schéma de la figure 7. Le but du système étant de Créer, à partir d'une horloge locale à 125MHz ($T_{125M}$) un signal TopTrameSecours, de période moyenne $T_{ech}$, asservie sur le signal Top_Trame_Ligne présent en E et nettoyé de la gigue qui affecte ce signal.

La séquence de fonctionnement de l'ensemble 63 comporte ainsi:

- Une première phase, ou phase 1, d'accrochage de la boucle durant laquelle on mesure la période moyenne du signal Top_Trame_Ligne sur 1024 trames de données. Le jitter ayant une valeur nulle on trouve une valeur moyenne égale à $T_{ech}$.

A l'issue de cette phase le module 636 délivre au module 635 une consigne initiale de période ($mmm_0,zzz_0 \cdot T_{125M}$) qui correspond à la valeur moyenne calculée. Cette consigne est maintenue pendant les N=128 trames de données qui suivent.

- une seconde phase, ou phase 2, de fonctionnement en boucle fermée durant laquelle le module 631 génère de manière itérative, pendant 128 périodes, un signal Top_Trame_Secours de période donnée.

La valeur de la période du signal Top_Trame_Secours ainsi généré est fixée à chaque itération n, par la consigne de période ($mmm,yyy_{n-1} \cdot T_{125M}$) calculée à partir du signal Top_Trame_Ligne extrait des 128 trames de données considérées à l'itération précédente n-1.

Durant cette seconde phase:

- on mesure, pour chaque trame reçue, le déphasage instantané du signal Top_Trame_Secours avec le signal Top_Trame_Ligne extrait de la trame considérée.

- on cumule les déphasages instantanés mesurés pour les 128 trames de données et on en fait la moyenne afin d'éliminer la gigue qui affecte le signal Top_Trame_Ligne extrait de chaque trame.

- on génère, en fonction de la valeur de ce cumul, une nouvelle consigne de période ($mmm, yyy_n \cdot T_{125M}$) pour la tranche n+1 de N=128 trames suivante afin de compenser l'écart mesuré.

Comme il a été dit précédemment, le choix du nombre N de trames de données prises en compte simultanément pour élaborer le signal Top_Trame_secours peut varier d'une application de l'invention à une autre. Dans le développement précédant on a considéré que N était égal à 128.

Cependant de manière plus générale il est à considérer que le choix du nombre N de trames de données résulte d'un compromis. En effet, N doit être choisi de telle façon que l'on puisse tirer parti du caractère centré sur 0 (valeur moyenne nulle) de la valeur de la gigue qui affecte le signal Top_Trame_ligne.

De ce fait N doit nécessairement prendre une valeur suffisante pour obtenir ce bénéfice.

Par ailleurs il est à noter que du fait de la constitution de la boucle de verrouillage destinée à asservir la période du signal Top_Trame_secours sur la période $T_{ech}$ et de l'accumulation nécessaire d'un nombre suffisant de mesures d'écarts de phase entre Top_Trame_secours et Top_Trame_ligne, pour gérer un signal d'erreur 637 significatif, la correction apportée au niveau de la synthèse du signal Top_Trame_secours ne se produit que toute les N trames.

De ce fait, afin d'éviter que la correction apportée n'engendre dans certains cas un saut trop important de la période du signal généré, N doit être choisi de façon à ce que le renouvellement de la consigne de correction soit le plus fréquent possible.

Le dispositif de synchronisation selon l'invention tel qu'il est décrit dans le texte qui précède peut bien évidemment faire l'objet de diverses variante de structure, l'essentiel étant que le principe général du procédé mis en oeuvre pour réaliser la synthèse du signal du signal Top_Trame_Ligne reste inchangé et que ce signal soit toujours obtenu par récupération du signal Top_Trame_Ligne sur le bus de données mesure de la période de ce signal et asservissement de la période du signal Top_Trame_Secours sur celle du signal Top_Trame_Ligne.

A ce propos en particulier, on peut envisager différente variantes de structure du module 63 chargé de la synthèse du signal Top_Trame_Secours à partir du signal Top_Trame_Ligne.

Il est par exemple possible de remplacer les modules 633 (accumulateur d'écarts de phase) et 634 (filtrage) par un unique module réalisant une fonction de filtrage non récursive (FIR) sur une profondeur de N trames (128 trame par exemple) et délivrant un signal d'erreur 637 dont la valeur est fonction de la valeur délivrée par le FIR.

Dans une telle configuration cependant, un signal d'erreur est délivré au rythme de la trame et non pas toute les N trames. Par suite, le module 635 chargé du calcul de la consigne (mmm,zzz) appliqué au module 631 doit être configuré pour recalculer la valeur de cette consigne pour chaque trame de donnée.

De même, la phase 2 du fonctionnement du module 63 dans son ensemble doit comporter pour chaque trame reçue:

- une mesure, (module 632) pour chaque trame reçue, le déphasage instantané (i.e. pour la trame considérée) du signal Top_Trame_Secours avec le signal Top_Trame_Ligne extrait de la trame considérée.
- le calcul d'un terme d'écart 637, par filtrage FIR sur une profondeur de N valeurs du déphasage instantané mesuré trame après trame;
- l'élaboration pour la trame à venir d'une nouvelle consigne de période ($mmm,yyy_n \cdot T_{125M}$), la valeur de la consigne pouvant dans ce cas être calculée pour chaque trame et pas seulement pour le groupe de N trame à venir.

**Revendications**

1. Procédé de génération d'un signal de synchronisation redondant CMI-Secours (H) d'un signal de synchronisation principal CMI véhiculé par un bus de synchronisation général destiné à synchroniser le fonctionnement de différents modules d'acquisition de données formant un groupe de modules d'acquisition de données, ou HUBs, et placés dans une chaine de modules d'acquisition, chaque module transférant les données acquises sur un bus de données commun à tous le modules d'acquisition de la chaine, lesdites données circulant sur le bus de données commun sous formes de trames de données (C), chaque trame comportant un top de début de trame ou Top_Trame_Ligne, ledit signal de synchronisation principal CMI étant synchrone du flot des trames (C) circulant sur le bus de données, **caractérisé en ce qu'**un signal de synchronisation redondant CMI_Secours est formé au niveau de chaque HUB en extrayant le top de début de trame (E) de chaque trame passant sur le bus de données et en produisant, un top de synchronisation interne ou Top_Trame_Secours (F) dont la période est asservie sur la période d'apparition du top de début de trame (E).

2. Procédé selon la revendication 1, **caractérisé en ce que** le signal Top_Trame_Secours (F) produit fait l'objet d'un recalage temporel fonction de la position du groupe de modules d'acquisition considéré dans la chaine.

3. Procédé selon la revendication 2, **caractérisé en ce qu'**après recalage temporel, le signal Top_Trame_Secours (F) est utilisé pour former le signal de synchronisation CMI_Secours.

4. Procédé selon l'une des revendications 1 à 3, **caractérisé en ce qu'**il met en oeuvre une opération de détection de la présence du signal CMI sur le bus de synchronisation général, le signal CMI-Secours étant substitué au signal CMI en cas de défaillance de ce dernier.

5. Procédé selon l'une quelconque des revendications précédentes, **caractérisé en ce que** le signal Top_Trame_Ligne étant un signal périodique de période $T_{ech}$ égal à la période de renouvellement des trames de données, le signal Top_Trame_Secours produit est un signal périodique dont la valeur de la période est définie à partir d'une horloge locale $T_{125M}$, à un instant donné et pour un nombre N donné de périodes, par la relation suivante:

$$T_{TopTrameSecours} = \frac{x \cdot mmm + (N-x) \cdot (mmm+1)}{N} \cdot T_{125M}$$
$$= mmm,zzz \cdot T_{125M}$$

où *mmm, zzz* représente un nombre décimal positif, dont la valeur est définie en prenant en compte, à l'instant considéré, le résultat d'un nombre donné de mesures du décalage temporel entre le signal Top_Trame_Ligne (E) extrait et le signal Top_Trame_Secours (F) produit.

6. Procédé selon la revendication 5, **caractérisé en ce que**, le nombre N de périodes considérées étant égal à 128, le nombre *mmm, zzz* est déterminé en prenant en compte, à l'instant considéré, le résultat de 128 mesures du décalage temporel entre le signal Top_Trame_Ligne (E) extrait et le signal Top_Trame_Secours (F) produit.

7. Procédé selon la revendication 6, **caractérisé en ce que** le nombre *mmm, zzz* est déterminé à partir de la moyenne de 128 mesures consécutives du décalage temporel entre le signal Top_Trame_Ligne (E) extrait et le signal Top_Trame_Secours (F) produit.

8. Procédé selon la revendication 6, **caractérisé en ce que** le nombre *mmm,zzz* est déterminé par filtrage, au moyen d'un FIR, de la valeur du décalage temporel entre le signal Top_Trame_Ligne (E) extrait et le signal Top_Trame_Secours (F) produit sur une profondeur de 128 mesures.

**9.** Procédé de synchronisation d'une pluralité de modules d'acquisition de données formant un groupe de modules d'acquisition, les modules d'acquisition de données étant placés dans une chaine de modules d'acquisition, chaque module transférant les données acquises sur un bus de données commun à tous les modules d'acquisition de la chaine,

lesdites données circulant sur le bus de données commun sous formes de trames de données (C), chaque trame comportant un top de début de trame ou Top_Trame_Ligne, ledit signal de synchronisation principal CMI étant synchrone du flot des trames (C) circulant sur le bus de données,

le procédé comprenant, pour chaque module d'acquisition, une étape d'utilisation d'un signal de synchronisation principal CMI véhiculé par un bus de synchronisation général pour synchroniser le module d'acquisition de données avec les autres modules d'acquisition du groupe de modules d'acquisition de données et, lorsqu'une défaillance du signal de synchronisation principal CMI est détectée, utilisation du signal de synchronisation redondant, à la place du signal de synchronisation principal CMI, pour synchroniser le module d'acquisition de données avec les autres modules d'acquisition du groupe de modules d'acquisition de données, le signal de synchronisation redondant étant généré par un procédé selon l'une quelconque des revendications 1 à 8.

**10.** Dispositif de synchronisation (31) apte à mettre en oeuvre, au sein du HUB (12) auquel il appartient, le procédé selon l'une quelconque des revendications 1 à 8, **caractérisé en ce qu'**il comporte des moyens pour générer un signal de synchronisation redondant CMI_Secours en extrayant le top de début de trame (E) de chaque trame passant sur le bus de données et en produisant un top de synchronisation interne ou Top_Trame_Secours (F), dont la période est asservie sur la période d'apparition du top de début de trame (E), les moyens pour générer le signal de synchronisation redondant CMI_secours comprenant :

- un module (62) d'extraction du top de trame, ou Top_Trame_Ligne (E), de chaque trame passant sur le bus de données,
- un ensemble de modules (63) générant le top de synchronisation interne ou Top_Trame_Secours (F), à partir du signal Top_Trame_Ligne (E) extrait par le module d'extraction, dont la période est asservie sur la période d'apparition du top de début de trame (E).

**11.** Dispositif de synchronisation (31) selon la revendication précédente, **caractérisé en ce qu'**il comporte:

- un module (64) qui assure le recalage temporel du signal Top_Trame_Secours (F) généré par l'ensemble de modules (63) et forme un signal rephasé (i.e. recalé temporellement) Top_Trame_Secours_dly (G);
- un module (65) qui génère un signal de synchronisation de secours, ou CMI_Secours (H)s, à partir du signal Top_Trame_Secours (F) généré et rephasé.

**12.** Dispositif de synchronisation (31) selon l'une quelconque des revendications 10 à 11, **caractérisé en ce qu'**il comporte :

- un module de contrôle (61) qui réalise le contrôle de la présence et de l'intégrité du signal de synchronisation CMI (A) fourni par le bus de synchronisation (13) en entrée du HUB (12);
- un module de multiplexage (66) qui délivre aux différentes unités d'acquisition du HUB (12), sur commande du module de contrôle d'intégrité (61), soit le signal de synchronisation CMI (A) reçu sur le bus de synchronisation (13), soit le signal de synchronisation CMI_Secours (H) synthétisé localement par le dispositif.

**13.** Dispositif de synchronisation (31) selon l'une quelconque des revendications 10 à 12, **caractérisé en ce que** l'ensemble de modules (63), qui génère le signal Top_Trame_Secours (F), comporte principalement:

- un module (631) qui génère le signal Top_Trame_Secours (F) à partir d'une information de consigne de période moyenne *(mmm,zzz · $T_{125}M$)*;
- un module comparateur de Phase (632) qui mesure le décalage temporel $\Delta T_{inst}$ entre le signal Top_Trame_Secours (F) généré et le signal Top_Trame_Ligne (E) extrait par le module d'extraction (62);
- un module accumulateur (633) qui réalise la somme, sur 128 périodes consécutives, des décalages instantanés $\Delta T_{inst}$ entre le signal Top_Trame_Secours (F) et le signal Top_Trame_Ligne (E) mesurés par le module Comparateur de Phase (632);
- une module de Filtrage (634) qui calcule une erreur moyenne par période, $\Delta T_{moy}$, cette erreur étant calculée par la formule suivante :

$$\Delta T_{moy} = \frac{1}{128} \sum_{k=1}^{128} \Delta T_{inst}$$

- un module de génération de consigne (635) qui délivre l'information de consigne de période moyenne (*mmm, zzz · $T_{125M}$*) au module (631) qui génère le signal Top_Trame_Secours (F), l'information de consigne étant élaborée à partir de la valeur de l'erreur

moyenne par période (637) fournie par le module de filtrage (634), ladite information étant remise à jour toutes les N=128 périodes;
- un module d'accrochage (636) qui calcule une première valeur de fréquence moyenne en intégrant le signal de synchronisation Top_Trame_Ligne (E) sur 1024 trames et délivre au module de génération de consigne (635) une première consigne initiale (*$mmm_0$, $zzz_0$*).

14. Module d'acquisition de données comprenant un dispositif d'acquisition selon l'une quelconque des revendications 10 à 13.

15. Système comprenant un groupe de modules d'acquisition de données placés dans une chaine de modules d'acquisition, le système comprenant un bus de synchronisation général destiné à véhiculer un signal de synchronisation principal destiné à synchroniser le fonctionnement des modules d'acquisition, le système comprenant un bus de données, chaque module transférant les données acquises sur le bus de données, le bus de données étant commun à tous le modules d'acquisition de la chaine, lesdites données circulant sur le bus de données commun sous formes de trames de données (C), chaque trame comportant un top de début de trame ou Top_Trame_Ligne, ledit signal de synchronisation principal CMI étant synchrone du flot des trames (C) circulant sur le bus de données, **caractérisé en ce que** chaque module d'acquisition de données est un module d'acquisition de données selon la revendication 14.

16. Système selon la revendication précédente, comprenant des groupes de capteurs, chaque module d'acquisition étant associé à un des groupes de capteurs.

**Patentansprüche**

1. Verfahren zur Erzeugung eines redundanten Synchronisationssignals CMI-Secours (H) eines Hauptsynchronisationssignals CMI, das von einem allgemeinen Synchronisationsbus transportiert wird, der dazu bestimmt ist, den Betrieb verschiedener Datenerfassungsmodule zu synchronisieren, die eine Gruppe von Datenerfassungsmodulen, oder HUBs, bilden und in einer Kette von Erfassungsmodulen angeordnet sind, wobei jedes Modul die erfassten Daten auf einen Datenbus überträgt, der allen Erfassungsmodulen der Kette gemeinsam ist, wobei die Daten auf dem gemeinsamen Datenbus in Form von Datenrahmen (C) zirkulieren, wobei jeder Rahmen einen Rahmenanfangs-Top oder Top_Trame_Ligne aufweist, wobei das Hauptsynchronisationssignal CMI synchron zum Fluss der Rahmen (C) ist, die auf dem Datenbus zirkulieren, **dadurch gekennzeichnet, dass** ein redundantes Synchronisationssignal CMI_Secours an jedem HUB gebildet wird, indem der Rahmenanfangs-Top (E) eines jeden Rahmens, der auf dem Datenbus läuft, extrahiert wird und ein interner Synchronisations-Top oder Top_Trame_Secours (F) erzeugt wird, dessen Periode auf die Periode des Auftretens des Rahmenanfangs-Tops (E) nachgeführt wird.

2. Verfahren nach Anspruch 1, **dadurch gekennzeichnet, dass** das erzeugte Signal Top_Trame_Secours (F) einer zeitlichen Neueinstellung unterzogen wird, die von der Position der betrachteten Gruppe von Erfassungsmodulen in der Kette abhängig ist.

3. Verfahren nach Anspruch 2, **dadurch gekennzeichnet, dass** nach der zeitlichen Neueinstellung das Signal Top_Trame_Secours (F) verwendet wird, um das Synchronisationssignal CMI_Secours zu bilden.

4. Verfahren nach einem der Ansprüche 1 bis 3, **dadurch gekennzeichnet, dass** es einen Vorgang zur Erkennung des Vorhandenseins des Signals CMI auf dem allgemeinen Synchronisationsbus implementiert, wobei das Signal CMI-Secours das Signals CMI ersetzt, falls dieses ausfällt.

5. Verfahren nach einem der vorhergehenden Ansprüche, **dadurch gekennzeichnet, dass** das Signal Top_Trame_Ligne ein periodisches Signal mit einer Periode $T_{ech}$ ist, die gleich der Erneuerungsperiode der Datenrahmen ist, das erzeugte Signal Top_Trame_Secours ein periodisches Signal ist, dessen Periodenwert ausgehend von einer lokalen Uhr $T_{125M}$ zu einem gegebenen Zeitpunkt und für eine gegebene Anzahl N von Perioden durch die folgende Beziehung definiert wird:

$$T_{TopTrameSecours} = \frac{x \cdot mmm + (N-x) \cdot (mmm+1)}{N} \cdot T_{125M}$$

$$= mmm,zzz \cdot T_{125M}$$

wobei *mmm,zzz* eine positive Dezimalzahl darstellt, deren Wert unter Berücksichtigung, zum betrachteten Zeitpunkt, des Ergebnisses einer gegebenen Anzahl von Messungen des Zeitversatzes zwischen dem extrahierten Signal Top_Trame_Ligne (E) und dem erzeugten Signal Top_Trame_Secours (F) definiert wird.

6. Verfahren nach Anspruch 5, **dadurch gekennzeichnet, dass**, da die Anzahl N der betrachteten Perioden gleich 128 ist, die Zahl *mmm, zzz* bestimmt wird, indem zum betrachteten Zeitpunkt das Ergebnis von 128 Messungen der Zeitverschiebung zwischen dem extrahierten Signal Top_Trame_Ligne (E) und dem erzeugten Signal Top_Trame_Secours (F) berücksichtigt wird.

7. Verfahren nach Anspruch 6, **dadurch gekennzeichnet, dass** die Zahl *mmm,zzz* aus dem Durchschnitt von 128 aufeinanderfolgenden Messungen des Zeitversatzes zwischen dem extrahierten Signal Top_Trame_Ligne (E) und dem erzeugten Signal Top_Trame_Secours (F) bestimmt wird.

8. Verfahren nach Anspruch 6, **dadurch gekennzeichnet, dass** die Zahl *mmm,zzz* durch Filterung mithilfe eines FIR des Wertes des Zeitversatzes zwischen dem extrahierten Signal Top_Trame_Ligne (E) und dem über eine Tiefe von 128 Messungen erzeugten Signal Top_Trame_Secours (F) bestimmt wird.

9. Verfahren zur Synchronisation einer Vielzahl von Datenerfassungsmodulen, die eine Gruppe von Erfassungsmodulen bilden, wobei die Datenerfassungsmodule in einer Kette von Erfassungsmodulen angeordnet sind, wobei jedes Modul die erfassten Daten auf einen Datenbus überträgt, der allen Erfassungsmodulen der Kette gemeinsam ist, wobei die Daten auf dem gemeinsamen Datenbus in Form von Datenrahmen (C) zirkulieren, wobei jeder Rahmen einen Rahmenanfangs-Top oder Top_Trame_Ligne aufweist, wobei das Hauptsynchronisationssignal CMI synchron mit dem Fluss der auf dem Datenbus zirkulierenden Rahmen (C) ist,
wobei das Verfahren für jedes Erfassungsmodul einen Schritt der Verwendung eines Hauptsynchronisationssignals CMI umfasst, das von einem allgemeinen Synchronisationsbus transportiert wird, um das Datenerfassungsmodul mit den anderen Erfassungsmodulen der Gruppe von Datenerfassungsmodulen zu synchronisieren, und, wenn ein Ausfall des Hauptsynchronisationssignals CMI erkannt wird, der Verwendung des redundanten Synchronisationssignals anstelle des Hauptsynchronisationssignals CMI zur Synchronisation des Datenerfassungsmoduls mit den anderen Erfassungsmodulen der Gruppe von Datenerfassungsmodulen, wobei das redundante Synchronisationssignal durch ein Verfahren nach einem der Ansprüche 1 bis 8 erzeugt wird.

10. Synchronisationsvorrichtung (31), die in der Lage ist, innerhalb des HUBs (12), zu dem sie gehört, das Verfahren nach einem der Ansprüche 1 bis 8 durchzuführen, **dadurch gekennzeichnet, dass** sie Mittel zur Erzeugung eines redundanten Synchronisationssignals CMI_Secours umfasst, indem sie den Rahmenanfangs-Top (E) eines jeden Rahmens, der über den Datenbus läuft, extrahiert und einen internen Synchronisations-Top oder Top_Trame_Secours (F) erzeugt, dessen Periode auf die Periode des Auftretens des Rahmenanfangs-Tops (E) nachgeführt wird, wobei die Mittel zum Erzeugen des redundanten Synchronisationssignals CMI_Secours Folgendes umfassen:

- ein Modul (62) zur Extraktion des Rahmentops oder Top_Trame_Ligne (E) eines jeden Rahmens, der über den Datenbus läuft,
- eine Gruppe von Modulen (63), die den internen Synchronisations-Top oder Top_Trame_Secours (F) erzeugen, anhand des Signals Top_Trame_Ligne (E), das durch das Extraktionsmodul extrahiert wird, dessen Periode auf die Periode des Auftretens des Rahmenanfangs-Tops (E) nachgeführt wird.

11. Synchronisationsvorrichtung (31) nach dem vorhergehenden Anspruch, **dadurch gekennzeichnet, dass** sie Folgendes umfasst:

- ein Modul (64), das eine zeitliche Neueinstellung des von der Gruppe von Modulen (63) erzeugten Signals Top_Trame_Secours (F) gewährleistet und ein rephasiertes (d. h. zeitlich neu eingestelltes) Signal Top_Trame_Secours_dly (G) bildet;
- ein Modul (65), das ein Hilfs-Synchronisationssignal oder CMI_ Secours (H)s aus dem erzeugten und rephasierten Signal Top_Trame_Secours (F) erzeugt.

12. Synchronisationsvorrichtung (31) nach einem der Ansprüche 10 bis 11, **dadurch gekennzeichnet, dass** sie Folgendes umfasst:

- ein Steuerungsmodul (61), das die Kontrolle des Vorhandenseins und der Integrität des Synchronisationssignals CMI (A) durchführt, das vom Synchronisationsbus (13) am Eingang des HUBs (12) bereitgestellt wird;
- ein Multiplexmodul (66), das auf Befehl des Integritätskontrollmoduls (61) an die verschiedenen Erfassungseinheiten des HUBs (12) entweder das auf dem Synchronisationsbus (13) empfangene Synchronisationssignal CMI (A) oder das lokal von der Vorrichtung synthetisierte Synchronisationssignal CMI_Secours (H) ausgibt.

13. Synchronisationsvorrichtung (31) nach einem der Ansprüche 10 bis 12, **dadurch gekennzeichnet, dass** die Gruppe von Modulen (63), die das Signal Top_Trame_Secours (F) erzeugt, hauptsächlich Folgendes umfasst:

- ein Modul (631), welches das Signal Top_Trame_Secours (F) anhand einer Sollwertinformation der mittleren Periode (*mmm, zzz* $\cdot$ $T_{125M}$) erzeugt;
- ein Phasenvergleichsmodul (632), das den Zeitversatz $\Delta T_{inst}$ zwischen dem erzeugten Signal Top_Trame_Secours (F) und dem durch das Extraktionsmodul (62) extrahierten Signal Top_Trame_Ligne (E) misst;
- ein Akkumulatormodul (633), das über 128 aufeinanderfolgende Perioden die Summe der momentanen Versätze $\Delta T_{inst}$ zwischen dem Signal Top_Trame_Secours (F) und dem Signal Top_Trame_Ligne (E) bildet, die vom Phasenvergleichsmodul (632) gemessen wurden;
- ein Filtermodul (634), das einen durchschnittlichen Fehler pro Periode, $\Delta T_{moy}$, berechnet, wobei dieser Fehler durch die folgende Formel berechnet wird:

$$\Delta T_{moy} = \frac{1}{128} \sum_{k=1}^{128} \Delta T_{inst}$$

- ein Sollwert-Erzeugungsmodul (635), das die Sollwertinformation der mittleren Periode (*mmm, zzz* $\cdot$ $T_{125M}$) an das Modul (631) liefert, welches das Signal Top_Trame_Secours (F) erzeugt, wobei die Sollwertinformation aus dem Wert des mittleren Fehlers pro Periode (637) abgeleitet wird, der durch das Filtermodul (634) geliefert wird, wobei die Information alle N=128 Perioden aktualisiert wird;
- ein Fangmodul (636), das einen ersten Durchschnittsfrequenzwert durch Integration des Synchronisationssignals Top_Trame_Ligne (E) über 1024 Rahmen berechnet und dem Sollwerterzeugungsmodul (635) einen ersten anfänglichen Sollwert ($mmm_0$, $zzz_0$) bereitstellt.

14. Datenerfassungsmodul, umfassend eine Erfassungsvorrichtung nach einem der Ansprüche 10 bis 13.

15. System, umfassend eine Gruppe von Datenerfassungsmodulen, die in einer Kette von Erfassungsmodulen angeordnet sind, wobei das System einen allgemeinen Synchronisationsbus umfasst, der dazu bestimmt ist, ein Hauptsynchronisationssignal zu übertragen, das dazu bestimmt ist, den Betrieb der Erfassungsmodule zu synchronisieren, wobei das System einen Datenbus umfasst, wobei jedes Modul die erfassten Daten auf den Datenbus überträgt, wobei der Datenbus allen Erfassungsmodulen der Kette gemeinsam ist, wobei die Daten auf dem gemeinsamen Datenbus in Form von Datenrahmen (C) zirkulieren, wobei jeder Rahmen einen Rahmenanfangs-Top oder Top_Trame_Ligne aufweist, wobei das Hauptsynchronisationssignal CMI synchron zum Fluss der auf dem Datenbus zirkulierenden Rahmen (C) ist, **dadurch gekennzeichnet, dass** jedes Datenerfassungsmodul ein Datenerfassungsmodul nach Anspruch 14 ist.

16. System nach dem vorhergehenden Anspruch, umfassend Gruppen von Sensoren, wobei jedes Datenerfassungsmodul einer der Gruppen von Sensoren zugeordnet ist.

**Claims**

1. A method for generating a redundant synchronisation signal CMI-Secours (H) of a main synchronisation signal CMI which is transmitted by a general synchronisation bus which is intended to synchronise the operation of various data acquisition modules which form a group of data acquisition modules, or HUBs, and which are placed in a chain of acquisition modules, each module transferring the data acquired to a data bus which is common to all the acquisition modules of the chain, the data circulating on the common data bus in the form of data frames (C), each frame having a frame beginning top or Top_Trame_Ligne, the main synchronisation signal CMI being synchronous with the flow of frames (C) circulating on the data bus, **characterised in that** a redundant synchronisation signal CMI_Secours is formed at each HUB by extracting the frame beginning top (E) of each frame which passes on the data bus and by producing an internal synchronisation top or Top_Trame_Secours (F) whose period is locked on the period of appearance of the frame beginning top (E).

2. The method according to claim 1, **characterised in that** the signal Top_Trame_Secours (F) produced is subjected to a temporal recalibration in accordance with the position of the group of acquisition modules considered in the chain.

3. The method according to claim 2, **characterised in that**, after the temporal recalibration, the signal Top_Trame_Secours (F) is used to form the synchronisation signal CMI_Secours.

4. The method according to any one of claims 1 to 3, **characterised in that** it implements an operation for detecting the presence of the CMI signal on the general synchronisation bus, the CMI-Secours signal being substituted for the CMI signal in the event of the latter.

5. The method according to any one of the preceding claims, **characterised in that**, since the signal Top_Trame_Ligne is a periodic signal of the period $T_{ech}$ which is equal to the renewal period of the data frames, the signal Top_Trame_Secours produced is a periodic signal whose value of the period is defined from a local clock $T_{125M}$, at a given time and for a given number N of periods, by the following relationship:

$$T_{TopTrameSecours} = \frac{x \cdot mmm + (N-x) \cdot (mmm+1)}{N} \cdot T_{125M}$$

$$= mmm, zzz \cdot T_{125M}$$

$$T_{TopTrameSecours} = \frac{x \cdot mmm + (N-x) \cdot (mmm+1)}{N} \cdot T_{125M} = mmm, zzz \cdot T_{125M}$$

where *mmm, zzz* represents a positive decimal number whose value is defined by taking into account, at the given time, the result of a given number of measurements of the time shift between the signal Top_Trame_Ligne (E) extracted and the signal Top_Trame_Secours (F) produced.

6. The method according to claim 5, **characterised in that**, the number N of periods considered being 128, the number *mmm, zzz* is determined by taking into account, at the time in question, the result of 128 measurements of the time shift between the signal Top_Trame_Ligne (E) extracted and the signal Top_Trame_Secours (F) produced.

7. The method according to claim 6, **characterised in that** the number *mmm, zzz* is determined from the mean of 128 consecutive measurements of the time shift between the signal Top_Trame_Ligne (E) extracted and the signal Top_Trame_Secours (F) produced.

8. The method according to claim 6, **characterised in that** the number *mmm, zzz* is determined by filtering using a FIR the time shift value between the signal Top_Trame_Ligne (E) extracted and the signal Top_Trame_Secours (F) produced over a depth of 128 measurements.

9. The method for synchronising a plurality of data acquisition modules which form a group of acquisition modules, the data acquisition modules being placed in a chain of acquisition modules, each module transferring the data acquired on a data bus which is common to all the acquisition modules of the chain, the data circulating on the common data bus in the form of data frames (C), each frame having a frame beginning top or Top_Trame_Ligne, the main synchronisation signal CMI being synchronous with the flow of frames (C) circulating on the data bus, the method comprising, for each acquisition module, a step of using a main synchronisation signal CMI which is transmitted by a general synchronisation bus in order to synchronise the data acquisition module with the other acquisition modules of the group of data acquisition modules, and when a failure of the main synchronisation signal CMI is detected, using the redundant synchronisation signal in place of the main synchronisation signal CMI in order to synchronise the data acquisition module with the other acquisition modules of the group of data acquisition modules, the redundant synchronisation signal being generated using a method according to any one of claims 1 to 8.

10. A synchronisation device (31) which is capable of carrying out, within the HUB (12) to which it belongs, the method according to any one of claims 1 to 8, **characterised in that** it comprises means for generating a redundant synchronisation signal CMI_Secours by extracting the frame beginning top (E) of each frame which passes on the data bus and by producing an internal synchronisation top or Top_Trame_Secours (F) whose period is locked on the appearance period of the frame beginning top (E), the means for generating the redundant synchronisation signal CMI_Secours comprising:

- a module (62) for extracting the frame top or Top_Trame_Ligne (E) of each frame which passes on the data bus,
- an assembly of modules (63) which generates the internal synchronisation top or Top_Trame_Secours (F) from the signal Top_Trame_Ligne (E) which is extracted by the extraction module and whose period is locked on the period of appearance of the frame beginning top (E).

11. The synchronisation device (31) according to the preceding claim, **characterised in that** it comprises:

- a module (64) which ensures the temporal recalibration of the signal Top_Trame_Secours (F) generated by the assembly of modules (63) and which forms a signal which is rephased (i.e. temporally recalibrated) Top_Trame_Secours_dly (G);
- a module (65) which generates an assistance synchronisation signal, or CMI_Secours (H)s, from the signal Top_Trame_Secours (F) which has been generated and rephased.

12. The synchronisation device (31) according to any one of claims 10 to 11, **characterised in that** it comprises:

- a control module (61) which carries out the control of the presence and integrity of the synchronisation signal CMI (A) provided by the synchronisation bus (13) at the input of the HUB (12);
- a multiplexing module (66) which supplies to the various acquisition units of the HUB (12), at the instruction of the integrity control module (61), either the synchronisation signal CMI (A) received on the synchronisation bus (13) or the synchronisation signal CMI_Secours (H) which is locally synthesised by the device.

13. The synchronisation device (31) according to any one of claims 10 to 12, **characterised in that** the assembly of modules (63) which generates the signal Top_Trame_Secours (F) mainly comprises:

- a module (631) which generates the signal Top_Trame_Secours (F) on the basis of an instruction information item of the mean period ($mmm, zzz \cdot T_{125M}$);
- a phase comparator module (632) which measures the time shift $\Delta T_{inst}$ between the signal Top_Trame_Secours (F) generated and the signal Top_Trame_Ligne (E) extracted by the extraction module (62);
- an accumulator module (633) which produces the sum, over 128 consecutive periods, of the instantaneous shifts $\Delta T_{inst}$ between the signal Top_Trame_Secours (F) and the signal Top_Trame_Ligne (E) measured by the phase comparator module (632);
- a filtering module (634) which calculates a mean error per period $\Delta T_{moy}$, this error being calculated by the following formula:

$$\Delta T_{moy} = \frac{1}{128} \sum_{k=1}^{128} \Delta T_{inst}$$

$$\Delta T_{moy} = \frac{1}{128} \sum_{k=1}^{128} \Delta T_{inst}$$

- an instruction generation module (635) which supplies the instruction information item of the mean period ($mmm, zzz \cdot T_{125M}$) to the module (631) which generates the signal Top_Trame_Secours (F), the instruction information item being derived from the value of the mean error per period (637) which is supplied by the filtering module (634), the information item being updated every N=128 periods;
- an attachment module (636) which calculates a first mean frequency value by integrating the synchronisation signal Top_Trame_Ligne (E) over 1024 frames and supplies to the instruction generation module (635) a first initial instruction ($mmm_0$, $zzz_0$).

14. A data acquisition module comprising an acquisition device according to any one of claims 10 to 13.

15. A system comprising a group of data acquisition modules which are placed in a chain of acquisition modules, the system comprising a general synchronisation bus which is intended to transport a main synchronisation signal which is intended to synchronise the operation of the acquisition modules, the system comprising a data bus, each module transferring the data acquired to the data bus, the data bus being common to all the acquisition modules of the chain, the data circulating on the common data bus in the form of data frames (C), each frame having a frame beginning top or Top_Trame_Ligne, the main synchronisation signal CMI being synchronous with the flow of the frames (C) circulating on the data bus, **characterised in that** each data acquisition module is a data acquisition module according to claim 14.

16. The system according to the preceding claim, comprising groups of sensors, each acquisition module being associated with one of the groups of sensors.

EP 3 717 934 B1

Fig. 1

21

Fig. 2

11

12

31                    31          Signal de synchro CMI

A                                 A

| Gestion synchro | B | C | Gestion synchro | D |
| HUB 0 | | | HUB N | |

Data out 0 - - - - - ▶ Data in N ──▶          Data out N

12                    12

Fig. 3

Fig. 4

```
                 ┌─────────────┐
                 │    Début    │
                 └──────┬──────┘
                        │                           51
                        ▼
           ┌────────────────────────┐  ╮
           │  Réception trame HUBₙ₋₁ │  ╯
           └───────────┬────────────┘
                       │                            52
                       ▼
           ┌────────────────────────┐  ╮
           │       Extraction       │  ╯
           │    Top_Trame_Ligne     │
           └───────────┬────────────┘
                       │                            53
                       ▼
           ┌────────────────────────┐  ╮
           │        Création        │  ╯
           │   Top_Trame_Secours    │
           └───────────┬────────────┘
                       │                            54
                       ▼
           ┌────────────────────────┐  ╮
           │        Retard          │  ╯
           │   Top_Trame_Secours    │
           └───────────┬────────────┘
                       │                            55
                       ▼
           ┌────────────────────────┐  ╮
           │    Création un signal  │  ╯
           │      CMI_Secours       │
           └───────────┬────────────┘
                       │
                       ▼
                 ┌─────────────┐
                 │     Fin     │
                 └─────────────┘
```

# Fig. 5

Fig. 6

E

| 1024 trames Accrochage | 128 trames asservissement | 128 trames asservissement | 128 trames asservissement |
|---|---|---|---|
| 1024 trames Data | 128 trames Data | 128 trames Data | 128 trames Data |

Calcul valeur initiale période synchro trame de secours

636

$mmm_0$
$zzz_0$

Génération Synchro trame de secours

631

Calcul période synchro trame de secours

$mmm_1$
$zzz_1$

-635

Génération Synchro trame de secours

631

Calcul période synchro trame de secours

$mmm_2$
$zzz_2$

-635

Génération Synchro trame de secours

631

Calcul période synchro trame de secours

$mmm_3$
$zzz_3$

-635

F

Génération séquence de 128 ToptrameSecours a la fréquence f0

Génération séquence de 128 ToptrameSecours a la fréquence f1

Génération séquence de 128 ToptrameSecours a la fréquence f2

$$T_0 = \frac{x.nnn_0 + (128-x)(nnn_0 + 1)}{128} T_{125}$$

$$T_1 = \frac{x.nnn_1 + (128-x)(nnn_1 + 1)}{128} T_{125}$$

$$T_2 = \frac{x.nnn_2 + (128-x)(nnn_2 + 1)}{128} T_{125}$$

Ajustement frequence

Ajustement frequence

Fig. 7

**EP 3 717 934 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2887096

- WO 02056176 A